# EUROPEAN PATENT SPECIFICATION

(11) **EP 1 213 167 B1**
(45) Date of publication and mention of the grant of the patent: **20.12.2006**
(21) Application number: 00905082.4
(22) Date of filing: 23.02.2000
(51) Int. Cl.: B60J 5/04, B60R 13/02

(54) **DOOR TRIMMING FOR VEHICLES**
TÜRENBEKLEIDUNG FÜR FAHRZEUGE
GARNITURE DE PORTES DE VEHICULES

(43) Date of publication of application: 12.06.2002
(73) Proprietor: Grupo Antolin-Ingenieria S.A., 09080 Burgos (ES)
(72) Inventor: MARTINEZ MORAL, Francisco Javier, E-09004 Burgos (ES); GONZALEZ GIL, Yolanda, E-47009 Valladolid (ES); MARCOS GONZALEZ, César, E-09002 Burgos (ES); GUERREAU, Michel, F-78510 Triel Sur Seine (FR)
(74) Representative: Esteban Perez-Serrano, Maria Isabel
(86) International application number: PCT/ES2000/000064
(87) International publication number: WO 2001/062531

(56) References cited:
- DE-A- 19 620 148
- ES-T- 2 107 268
- ES-T- 2 116 785
- US-A- 5 902 004

## Description

This invention refers to a door trim for automobile vehicles, established in combination with the vehicle door itself, in such a way that the motor of the window winder unit is incorporated into the unit.

In traditional systems, the motor of the vehicle window winder unit is screwed or bolted to the internal side of the doors, i.e. to the sheet metal plate of the door inner liner that forms part of the passenger compartment of the vehicle. The other items present on the door are usually fixed to this plate and then the internal aesthetic lining or trim, which the user sees from the inside of the vehicle, is situated over this.

At present, there is a tendency to produce modular solutions, in which one single part includes several items and functions of those that are traditionally contained in the door. In some of these plastic, metallic, hybrid, etc. modules, that are present on the market, the motor is fixed to the module, which is then screwed or bolted to a more or less basic structure of the door.

A traditional door inner liner is exposed to the entrance of smoke and dirt and, logically, is a humid or damp area. Because of this, the inner liner is usually provided with holes to allow water to drain out, as well as different waterproof systems that prevent the passage of water and dust to the interior of the vehicle, thus protecting the panel with the placing of insulating materials that prevent the passage of water around the periphery of the panel, creating a dry area between the internal metal plate of the door and the panel by means of a film adhered to this plate.

The items housed in the door inner liner, including the motor of the window winder unit, are exposed to a damp atmosphere and might come into contact with water.

Independently of whether the motor is fixed to the sheet plate or to a module, this situation is normal in traditional systems.

However, a type of module is known on the market, which is screwed or bolted around its periphery to the internal side of the door, completely isolating the interior of the door inner liner from the passenger compartment. In this way, a dry area is formed between this module and the door trim, in which several of the items contained in this module can be housed.

Use is made of this dry area to place part of the motor, all the electronics and the motor-reducer system, whereas the drum and its cover, from which the cable of the window winder system leave, remain in the damp area. Obviously, it is necessary to take care with the waterproofing through the hole that the motor unit passes through from the dry area to the damp area.

These traditional techniques have several disadvantages, among which we can mention the fact that in order to have accessibility to the motor, it is necessary to remove the door panel.

In the same way, the help of several items is needed in order to achieve the water-tightness required.
One of the disadvantages of this system lies in the fact that it is obligatory to perform several operations in order to pre-assemble the different items on the panel.

It is known in the State of the Art, some door structures as the one disclosed in ES 2107268 which comprises a module on which is supported a motor of a window winder, being conveniently waterproof on one of its sides by means of additional films, while on the other side is cover by a trim. This door implies some inconveniences, on the one hand the fact of being necessary to add waterproofing films, the fact of not allowing to have pro-assembled the motor window winder, the fact of needing and additional piece for supporting the motor and additional elements, and on the other hand the fact of being necessary to complete door panel to have access to the motor. So the aim of the present invention is to overcome the aforementioned drawbacks developing a door trim, which is watertight on one of its sides, allows to house the motor previously to be assembled the door trim onto the door, and wherein the motor of the window winder and additional pieces are accessible just removing some parts of the door trim, preventing the problems if the window pane becomes blocked in the upper part.

The basic objective of the invention is to provide a trim that supports the motor of the window winder unit and in which this motor is in the dry area, in which a lower number of requirements are needed for protection against damp, and obviously with a lower price.

Another objective of the invention is a trim that has the window winder system pre-assembled, thus enabling these operations to be performed easily, quickly and ergonomically.

Another objective of the invention is the fact that all the pre-assembly operations on the panel are taken out of the manufacturer's vehicle door line, with the resulting saving in time and space for the manufacturer

Another objective of the invention is that the waterproofing of the motor is achieved with fewer items, thus providing a more lightweight and economical door assembly.

Another objective of the invention is that the motor is accessible without needing to remove the door panel, and by removing only one or some parts of the door trim, thus preventing problems if the window pane becomes blocked in the upper part.

In order to achieve these objectives, the invention is defined by claim whereby a door trim supports the motor of the window winder unit during the assembly of the window winder unit onto the door and can continue to support it throughout the whole of its operational life. The motor is connected to the trim during assembly and its final fixing can be either only to this trim or to the steel plate through this trim.

This trim, in accordance with the invention, at the same time that it includes the motor, also keeps it housed in a dry area and, independently of its final fixing, this motor is incorporated onto the visible or external side of the trim panel, with at least one part of the said trim being designed in order to keep the motor concealed, while at the same time trying to keep this part easily removable so as to have access to the motor in case of breakdown of the window winder.

The door trim, independently of the material that it is made of, has a punched area (swaging) made on its visible side, which is destined specifically for housing the motor of the vehicle window winder, and at least the motor-reducer and its electronic part. This punched area forma a "box", which has to be large enough to also house the connector that joins the electronic box of the motor to the general door wiring.

The routing of the wiring passes from the unseen side of the trim to its visible side, to the interior of the punched area (box) where the motor is fitted, through a hole made in the punched area itself, which is the reason why a waterproof seal or similar system is used, that guarantees the necessary waterproofing.

The punched area that creates the "box" in itself forms a dry area that completely insulates that are items housed inside it as a dry area.

At the same time, there is another portion of the trim, in accordance with the invention, which is situated on its external side, i.e. it is visible from the interior of the passenger compartment of the vehicle, above the punched area, concealing the assembly received in this punched area. This second portion of the trim will be easy to open and close, as will be explained later.

In the context of the invention, two practical solutions are contemplated and claimed, namely:
A. - One, already described, according to which the motor reducer, its electronic part and the connector are housed inside the dry area shaped by the punched area or swaging in the trim.
B. - Another, according to which all the components of the window winder unit, including the connector that joins the electronic box of the motor to the general door wiring, are housed inside the punched area or swaging in the trim.

In case A, the punched area holds the motor-reducer and its electronic part, as well as the connector. The wiring for the motor passes to the interior of the punched area through a hole through this punched area, and s provided with its waterproof seals.

The drum on which the cables of the window winder are wound is situated on the unseen side of the trim, outside the punched area, protruding towards the damp area. The passage of the interconnection is carried out through a hole of the same thickness as the trim, in the punched area, and the necessary waterproofing is carried out, by means of a gasket or seal that is incorporated into the motor, in a constructive solution that already exists on the market.

Other holes present in the punched area are those destined for the passage of the screws or bolts that join the drum cover to the rest of the motor assembly and all the system to the door panel, or to the panel and steel plate, with all these holes being designed to be waterproof.

The drum and its cover logically have the appropriate outlets for the cables of the window winder unit.

In case B, the punched area receives the motor of the window winder unit with al its components, all of which are therefore housed in the dry area.

As the drum on which the cable are wound is on the visible side of the trim and the cables towards the unseen side, the punched area in this case has a lateral opening in one of its sides. All the motor is passed through this opening to the outer side of the trim, leaving the rest of the window winder unit, to which it is joined, towards the other side.

In order to maintain the water-tightness of the punched area, this lateral opening must be closed during the working life of the assembly, leaving only some leaktight holes for the outlets of the drum cover of the cable responsible for directing these cables towards the rest of the window winder system.

To put this sealing into practice, two different forms of action have been contemplated. One of them is based on a waterproof seal or gasket and the other with a constructive solution. In this latter version, a protrusion from another part of the panel, such as the one that on the exterior conceals the punched area and the assembly housed in its interior, can be placed so as to cover the lateral opening.

This version B has an additional advantage over case A, in that the window winder unit can be adjusted before it is assembled onto its panel.

The accompanying figure show practical solutions of the invention and in them the following are represented:
Figure 1 shows a partial elevation of the outer side of the trim with the cover closing the punched area.
Figure2 is an elevation, also partial, of the outer side of the trim without the cover that closes the punched area.
Figure 3 is a perspective of the visible side of the trim with the cover partly open.
Figure 4 is a partial perspective of the unseen side of the trim.
Figure 5 is a view of the cross section along I-I in Fig. 1
Figure 6 is an elevation of the visible side of the trim, in the other variant of the invention.
Figure 7 is a perspective of the unseen side of the trim shown in Fig. 6.
Figure 8 is another perspective of the unseen side of the trim shown in Fig. 6.

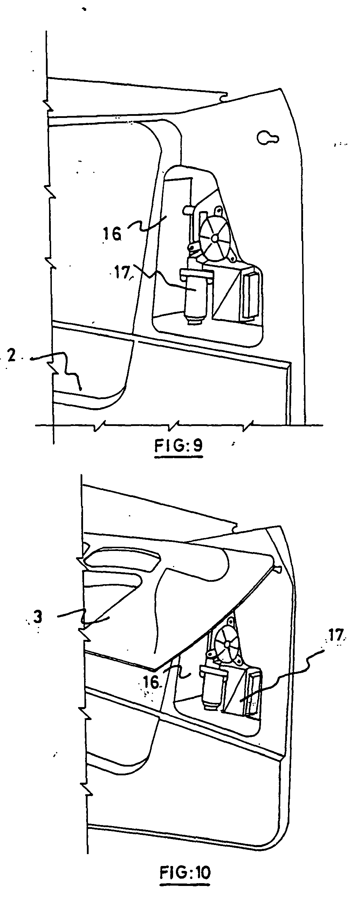

Figure 9 is a perspective of the visible side of the trim shown in Fig. 6.
Figure 10 is a perspective similar to the one shown in Fig. 8, with the cover partly open.

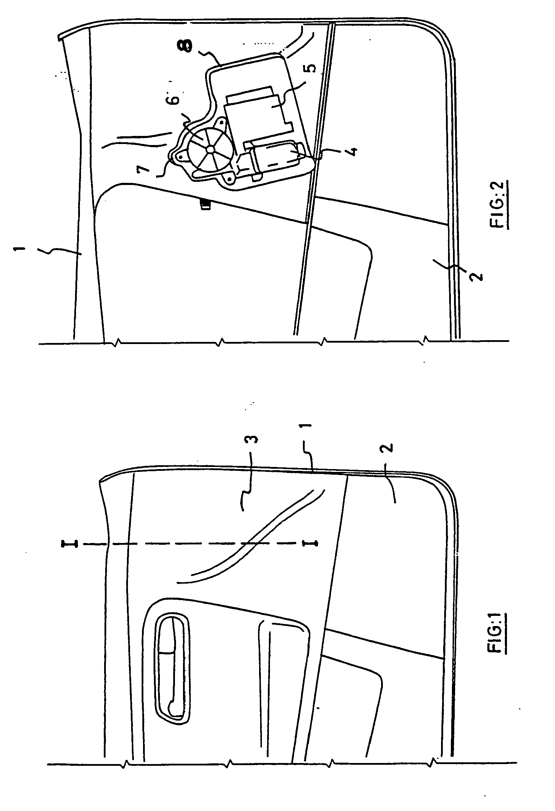

Looking now at Fig. 1, we can appreciate the trim (1), which has its visible side (2) and the cover (3) that covers the punched (swaged) area performed in the part from this said side (2). This will be the outer appearance of the trim from the interior of the vehicle passenger compartment.

When the cover is out of its position, Fig. 2, we can appreciate the punched area (8) carried out in the visible side (2) by way of a box, inside which it is possible to see the motor (4), the electronic box (5) and the motor-reducer (6) with the fixing points (7). To the right of the electronic box (5) there is a space for locating the connector, not shown, which will receive the cable responsible for the power supply.

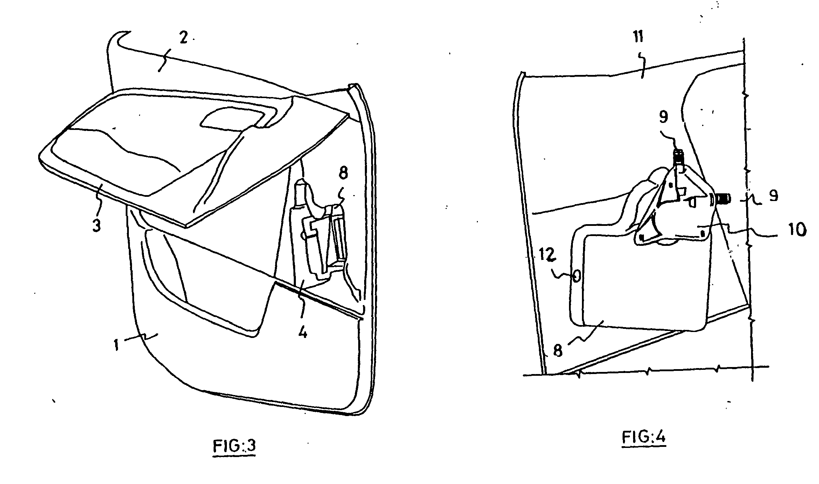

In accordance with Fig. 3, the cover (3) of the trim (1) is in a partially opened position, turning on the panel that if forms part of, in a way already known in itself

The inner or unseen side (11) of the panel appears in Fig. 4, with the punched area (8), that receives the items described, on the other side. In this Figure we can appreciate the cover (10) of the drum and the outlet (9) to receive the cables of the window winder unit, as well as the passage (12) for the intake of the electric cable towards the connector housed in the interior of the punched area (8).

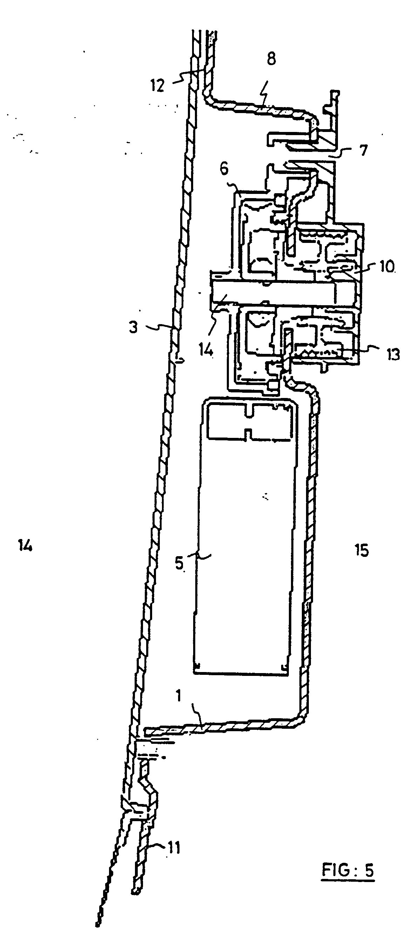

The contents of Figures 1 to 4 correspond to the invention in which some of the components are to be found in the damp area of the assembly and a typical way of carrying out this assembly is shown in Figure 5.

In this section, we can point out the dry area (14) of the assembly and its damp area (15). In the same way, the panel of the trim (1) itself shows its outer visible side (2) towards the dry area (14) and its inner unseen side (11) towards the damp area (15).

The punched or swaged area (8) is carried out from the visible side (2) and the cover (3) closes the corresponding space, which becomes concealed to the exterior. In the space provided by the punched area are received the motor reducer unit (6), the electronic box (5), housed in the dry area, as well as the drum (13) and the drum cover (10), housed in the damp area.

The cover (10) is fixed to the base of the punched area (8) by means of the holes (7), suitably leaktight, and the shaft (14) of the motor reducer unit also passes through the thickness of the trim, being provided with the necessary waterproofing by a seal or gasket of the motor itself.

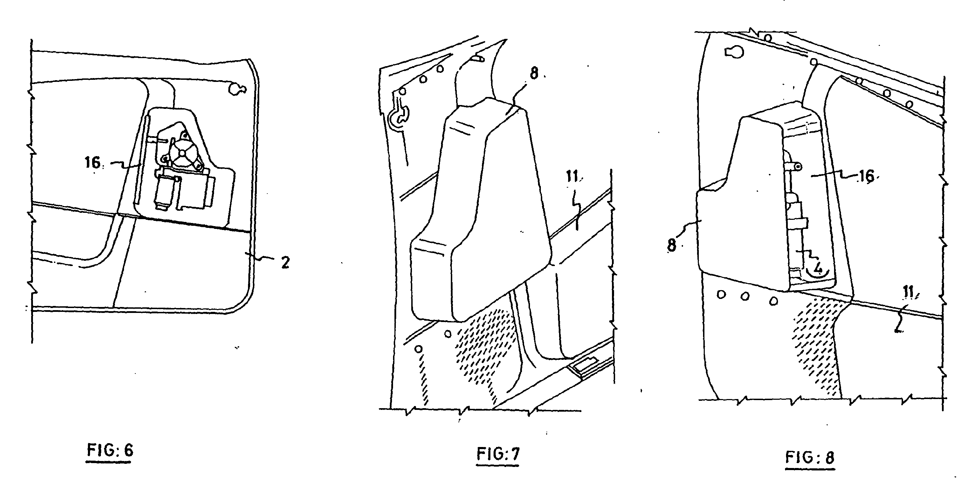

In accordance with Figure 6, the constructive variant in accordance with the invention is represented, according to which the motor and all its components are housed in the interior of the punched area (8) carried out from the visible side (2). In this Fig. 6, we can also observe the lateral opening (16) in the punched area itself so that the assembly can be housed.

The unseen side (11) of the trim (1) in Figures 7 and 8 enables the said lateral opening (16) for the intake of the wiring to the connector and to the drum, and also to be used to be able to carry out adjustment of the window winder unit before the assembly of the trim, to be seen in greater detail.

The specific layout is defined in Fig. 7, in which the situation of the different components is appreciated in greater detail.

Finally, in Figure 10, we can see the sealing cover (3) that conceals this assembly of items.

In these drawings, the sealing cover of the lateral opening (6) in the punched area (8) has not been shown. This might be similar to the cover (3) or with a waterproof gasket or seal that covers the said opening, as mentioned previously.

## Claims

1. Vehicle door trim panel (1) adapted to engage and to be mounted onto a door of a vehicle,
- said trim panel (1) remains visible with a visible side (2) towards the interior (14) of an passenger compartment of the vehicle;
- said trim panel (1) creating a delimiting separation between
-- a dry area towards said interior (14) of the vehicle and
-- a damp area towards an exterior (15) of the vehicle;
**characterised in that**
- on said trim panel (1), starting from said visible side (2), a waterproof punched area (8) in form of a cavity is carried out by swaging;
- at least a motor (4), a motor-reducer (6), an electronic box (5) and a connector for receiving power supply cables of a window winder system are housed inside said cavity;
- said trim panel (1) carrying in said cavity said motor (4), said motor reducer (6), said electronic box (5) and said connector during its assembly to the door and during their working life; and
- an outer cover (3) is fixed to said trim panel (1) so as to close said cavity towards the interior (14) of said passenger compartment.

2. Vehicle door trim panel (1) in accordance with claim 1, wherein a coiling drum (13) for a window winder cable and a drum cover (10) are located in said damp area adjacent to a non-visible side (11) of said trim panel, and wherein leaktight holes (7) are made in said punched area (8)
- for the passage of fixing screws or bolts to secure said drum cover (10),
- for a shaft (14) of said motor reducer (6) to pass through, and
- for said power supply cables leading to said connector.

3. Vehicle door trim panel (1) in accordance with claim 2, wherein said drum cover (10) is provided with outlets (9) to receive said power supply cables of said window winder system.

4. Vehicle door trim panel (1) in accordance with claim 1, wherein
- a lateral opening (16) is provided in one side of said punched area (8) forming said cavity,
- said motor, said motor reducer (6), said electronic box (5), said connector, a coiling drum (13) and a drum cover (10) of said window winder system are housed in said cavity during assembly and during working life; and
- a sealing cover closes said lateral opening (16).

5. Vehicle door trim panel (1) in accordance with claim 4, wherein said lateral opening (16) enables said window winder system to be adjusted before its assembly.

6. Vehicle door trim panel (1) in accordance with claim 4, wherein leaktight holes (7) are made in said punched area and in said sealing cover closing said lateral opening (16), said holes are suitable for the passage of said power supply and drive cables and of elements for fixing the window winder system to the trim panel.

7. Vehicle door trim panel (1) in accordance with claim 4, wherein a waterproof gasket or seal is used as said sealing cover closing said lateral opening (16).

## Patentansprüche

1. Fahrzeugtürverkleidung, (1) die sich einrasten lässt und an einer Fahrzeugtür montiert werden kann,
- wobei besagte Verkleidung (1) im Innenraum (14) der Fahrgastzelle des Fahrzeugs einseitig sichtbar (2) bleibt;
- besagte Verkleidung (1) trennt
- einen trockenen Bereich auf Seite des Fahrzeuginnenraums (14) und
- einen feuchten Bereich an der Außenseite (15) des Fahrzeugs;
**dadurch gekennzeichnet, dass**
- besagte Verkleidung (1), ausgehend von besagter sichtbarer Seite über einen (2) wasserdichten, gestanzten Bereich (8) verfügt, der in Form einer Kavität durch Sickung ausgeführt ist.
- wenigstens ein Motor (4), ein Reduzierer (6), ein elektronischer Kasten (5) und ein Anschluss für die Stromversorgungskabel eines Fensterhebersystems in besagte Kavität passen.
- die Verkleidung (1) in besagter Kavität den besagten Motor (4), den besagten Reduzierer (6) den besagten elektronischen Kasten (5) und den besagten Anschluss während ihres Einbaus und ihrer Lebensdauer aufnimmt und
- eine äußere Abdeckung (3) an besagter Verkleidung (1) angebracht wird, um die Kavität auf Innenraumseite (14) der besagten Fahrgastzelle zu verschließen.

2. Fahrzeugtürverkleidung (1) gemäß Anspruch 1, wobei sich eine Wicklungstrommel (13) für ein Fensterheberkabel und eine Trommelabdeckung (10) in dem besagten feuchten Bereich befindet, der an die nicht sichtbare Seite (11) der besagten Verkleidung anschließt und wobei leckdichte Löcher (7) in besagtem gestanzten Bereich (8) erzeugt werden,
- um Befestigungsschrauben oder Bolzen einzusetzen, welche die besagte Trommelabdeckung (10) fixieren,
- um eine Welle (14) des besagten Reduzierers (6) hindurch zu führen sowie
- für die besagten Stromversorgungskabel, die zu besagtem Anschluss führen.

3. Fahrzeugtürverkleidung (1) gemäß Anspruch 2, wobei besagte Trommelabdeckung (10) über Durchlässe (9) verfügt, um besagte Stromversorgungskabel für das besagte Fensterhebersystem aufzunehmen.

4. Fahrzeugtürverkleidung (1) gemäß Anspruch 1, wobei
- eine seitliche Öffnung in einer Seite des gestanzten Bereichs (8) vorgesehen ist, der die besagte Kavität bildet.
- der besagte Motor, der besagte Reduzierer (6), der besagte elektronische Kasten (5), der besagte Anschluss, eine Wicklungstrommel (13) und eine Trommelabdeckung(10) des besagten Fensterhebersystems in besagter Kavität während des Einbaus und der Lebensdauer aufgenommen werden; und
- eine Dichtabdeckung, die die besagte seitliche Öffnung (16) verschließt.

5. Fahrzeugtürverkleidung (1) gemäß Anspruch 4, wobei besagte seitliche Öffnung (16) es ermöglicht, das besagte Fensterhebersystem vor dem Zusammenbau einzupassen.

6. Fahrzeugtürverkleidung (1) gemäß Anspruch 4, wobei leckdichte Löcher (7) erzeugt werden in dem besagten gestanzten Bereich und in besagter Dichtabdeckung, die die besagte seitliche Öffnung (16) schließt. Besagte Löcher sind für den Durchlass der besagten Stromversorgung, der Antriebskabel und der Elemente für die Montage des Fensterhebersystems an der Fahrzeugtürverkleidung geeignet.

7. Fahrzeugtürverkleidung (1) gemäß Anspruch 4, wobei ein wasserdichter Flansch oder eine Dichtung als besagte Dichtabdeckung für die besagte seitliche Öffnung (16) verwendet wird.

## Revendications

1. Panneau de garnissage (1) de portière de véhicule adapté pour s'engager et pour être monté sur une portière d'un véhicule,
- ledit panneau de garnissage (1) demeure visible avec un côté visible (2) vers l'intérieur (14) d'un compartiment de passagers du véhicule ;
- ledit panneau de garnissage (1) créant une séparation de délimitation entre
• une zone sèche vers l'intérieur (14) du véhicule et
• une zone humide vers l'extérieur (15) du véhicule ;
**caractérisé en ce que**
- sur ledit panneau de garnissage (1), en commençant par ledit côté visible (2), une zone (8) perforée étanche sous forme d'une cavité est mise en oeuvre par rétreint. ;
- au moins un moteur (4), un moteur-réducteur (6), un boîtier électronique (5) et un connecteur pour recevoir des câbles distributeurs de courant d'un système de lève-glace sont logés au sein de ladite cavité ;
- ledit panneau de garnissage (1) portant dans ladite cavité ledit moteur (4), ledit moteur-réducteur (6). Ledit boîtier électronique (5) et ledit connecteur pendant son assemblage à la porte et pendant leur vie utile ; et
- un couvercle extérieur (3) est fixé audit panneau de garnissage (1) pour fermer ladite cavité vers l'intérieur (14) dudit compartiment de passagers.

2. Panneau de garnissage (1) de portière de véhicule selon la revendication 1, dans lequel un tambour de bobinage (13) pour un câble de lève-glace et un couvercle de tambour (10) sont situés dans ladite zone humide attenante à un côté non-visible (11) dudit panneau de garnissage, et dans lequel sont aménagés des trous étanches dans ladite zone perforée (8)
- pour le passage de vis ou de boulons de fixage pour assurer ledit couvercle (10),
- pour qu'un arbre (14) dudit moteur-réducteur (6) passe à travers, et
- pour lesdits câbles distributeurs de courant menant audit connecteur.

3. Panneau de garnissage (1) de portière de véhicule selon la revendication 2, dans laquelle ledit couvercle de tambour (10) est pourvu de sorties (9) pour recevoir lesdits câbles distributeurs de courant dudit système de lève-glace

4. Panneau de garnissage (1) de portière de véhicule selon la revendication 1, dans lequel
- une ouverture latérale (16) est aménagée dans un côté de ladite zone perforée (8) formant ladite cavité,
- ledit moteur, ledit moteur-réducteur (6),ledit boîtier électronique (5) et ledit connecteur, un tambour de bobinage (13) et un couvercle de tambour (10) dudit système de lève-glace sont logés dans ladite cavité pendant l'assemblage et pendant leur vie utile ; et
- un couvercle d'étanchéité ferme ladite ouverture latérale (16).

5. Panneau de garnissage (1) de portière de véhicule selon la revendication 4, dans lequel ladite ouverture latérale (16) permet d'ajuster ledit système de lève-glace avant son assemblage.

6. Panneau de garnissage (1) de portière de véhicule selon la revendication 4, dans lequel sont aménagés des trous étanches (7) dans ladite zone perforée et dans ledit couvercle d'étanchéité fermant ladite ouverture latérale (16), lesdits trous étant appropriés pour le passage desdits câbles distributeurs de courant et d'entraînement et d'éléments de fixage du système de lève-glace au panneau de garnissage.

7. Panneau de garnissage (1) de portière de véhicule selon la revendication 4, dans lequel un joint ou bague d'étanchéité est utilisé comme ledit couvercle d'étanchéité fermant ladite ouverture latérale (16).
